(19) Europäisches Patentamt
European Patent Office
Office européen des brevets

(11) EP 3 234 020 B1

(12) **EUROPEAN PATENT SPECIFICATION**

(45) Date of publication and mention of the grant of the patent:
**03.03.2021 Bulletin 2021/09**

(21) Application number: **15828427.3**

(22) Date of filing: **17.12.2015**

(51) Int Cl.:
***C08L 69/00*** (2006.01) ***C08L 23/10*** (2006.01)
***C08L 23/12*** (2006.01) ***C08L 25/08*** (2006.01)
***C08L 25/10*** (2006.01) ***C08L 23/02*** (2006.01)
***C08L 23/14*** (2006.01) ***C08L 23/16*** (2006.01)
***C08L 35/06*** (2006.01) ***C08L 29/08*** (2006.01)
***C08L 55/02*** (2006.01)

(86) International application number:
**PCT/US2015/066365**

(87) International publication number:
**WO 2016/100660 (23.06.2016 Gazette 2016/25)**

(54) **COMPOSITION OF POLYCARBONATE AND POLYPROPYLENE BLENDS**
STABILISIERUNG VON POLYCARBONAT- UND POLYPROPYLENMISCHUNGEN
COMPOSITION DE POLYCARBONATE ET MÉLANGES DE POLYPROPYLÈNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.12.2014 US 201462093609 P**

(43) Date of publication of application:
**25.10.2017 Bulletin 2017/43**

(73) Proprietor: **SABIC Global Technologies B.V.**
**4612 PX Bergen op Zoom (NL)**

(72) Inventors:
- **HOWIE, Douglas, W.**
**Parkersburg, WV 26101 (US)**
- **ZHAO, Wei**
**Evansville, TN 47712 (US)**
- **SUN, Bin**
**Newburgh, IN 47360 (US)**
- **KULKARNI, Amit**
**Evansville, TN 47712 (US)**

(74) Representative: **Sabic Intellectual Property Group**
**Sabic Intellectual Property Department**
**P.O. Box 3008**
**6160 GA Geleen (NL)**

(56) References cited:
**EP-A1- 2 751 203**
**US-A- 4 806 597**
**US-A- 5 021 504**
**US-A1- 2009 136 774**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 234 020 B1

## Description

TECHNICAL FIELD

The disclosure concerns blends of polycarbonate and polypropylene polymers and methods for forming the same.

BACKGROUND

Blending polymers is a quick, easy and economical way to create new materials with combination properties from each individual component. Polymer blends roughly can be categorized as miscible, compatible, and incompatible. With miscible polymer blends, there are no distinctive phases of each polymer, the whole blend is one uniform phase. In compatible blends, each polymer resides within its own phase with certain interactions between each polymer at the interface. Incompatible blends contain a distinctive phase of each polymer also, however, there is no adhesion between each phase. The incompatible polymers are thermodynamically repelling each other.

Industry has utilized a variety of miscible and compatible blends for numerous applications. It is rare, however, to find any application for incompatible blends due to the lack of morphology control.

Polycarbonate and polypropylene are two incompatible polymers. Polycarbonate is an engineering thermoplastic while polypropylene is a commodity plastic. These polymers are distinctively different from molecular structure to molecular weight and molecular weight distribution, and to physical and mechanical properties. The significant differences between polycarbonate and polypropylene make it very difficult to achieve compatibilization between the two polymers. Direct compounding of polycarbonate and polypropylene in twin screw extruder will lead to strands of polymers that will not chop utilizing a pelletizer at ambient environment US 5 021 504 A discloses thermoplastic resin compositions based on polycarbonate and polyolefin whose compatibility is improved to have an excellent balance of mechanical strength, moldability and solvent resistance are desired particularly for automobile parts.

There is a need in the art for processes that will allow use of polycarbonate and polypropylene blends.

SUMMARY

The present disclosure concerns compositions comprising: a) from about 55 wt% to about 85 wt% polycarbonate polymer; b) from about 10 wt% to about 30 wt% polypropylene polymer; and c) from about 2 wt% to about 15 wt% of a compatibilizer comprising hydrogenated styrene isoprene copolymer. Some embodiments have about 65-85 (or 68-82) wt% of polycarbonate, about 15-40 (or 18-22) wt% polypropylene and about 2-15 wt% compatibilzer.

The disclosure also concerns methods of forming a polymer composition comprising coextruding a mixture as described herein.

The disclosure further relates to articles comprising the polymer compositions described herein.

Additional aspects will be set forth in part in the description which follows, and in part will be obvious from the description, or can be learned by practice of the disclosure. The advantages of the disclosure will be realized and attained by means of the elements and combinations particularly pointed out in the appended claims. It is to be understood that both the foregoing general description and the following detailed description are exemplary and explanatory only and are not restrictive of the disclosure, as claimed.

BRIEF DESCRIPTION OF THE DRAWINGS

The following is a brief description of the drawings wherein like elements are numbered alike and which are exemplary of the various embodiments described herein.

**Fig. 1** illustrates a pellet evaluation where "V" indicates that the pellets are acceptable to carry on to next step (molding study) and "X" as poor compatibility, not suitable for further study.

**Fig. 2** presents examples of center gated disks where a delaminated disk is evaluated.

DETAILED DESCRIPTION OF ILLUSTRATIVE EMBODIMENTS

The disclosure concerns, *inter alia*, polymer compositions comprising: a) from about 55 wt% to about 85 wt% polycarbonate polymer; b) from about 10 wt% to about 30 wt% polypropylene polymer; and c) from about 2 wt% to about 15 wt% of a compatibilizer comprising hydrogenated styrene isoprene copolymer.

**Polycarbonate Polymer**

The terms "polycarbonate" or "polycarbonates" as used herein includes copolycarbonates, homopolycarbonates and (co)polyester carbonates.

The term polycarbonate can be further defined as compositions have repeating structural units of the formula (1):

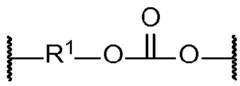 (1),

in which at least 60 percent of the total number of $R^1$ groups are aromatic organic radicals and the balance thereof are aliphatic, alicyclic, or aromatic radicals. In a further aspect, each $R^1$ is an aromatic organic radical and, more preferably, a radical of the formula (2):

$$-A^1-Y^1-A^2- \qquad (2),$$

wherein each of $A^1$ and $A^2$ is a monocyclic divalent aryl radical and $Y^1$ is a bridging radical having one or two atoms that separate $A^1$ from $A^2$. In various aspects, one atom separates $A^1$ from $A^2$. For example, radicals of this type include, but are not limited to, radicals such as -O- -S-, -S(O)-, $-S(O_2)-$, -C(O)-, methylene, cyclohexyl-methylene, 2-[2.2.1]-bicycloheptylidene, ethylidene, isopropylidene, neopentylidene, cyclohexylidene, cyclopentadecylidene, cyclododecylidene, and adamantylidene. The bridging radical $Y^1$ is preferably a hydrocarbon group or a saturated hydrocarbon group such as methylene, cyclohexylidene, or isopropylidene. Polycarbonate materials include materials disclosed and described in U.S. Patent No. 7,786,246.

**Polypropylene**

As used herein, the term "polypropylene" refers to a polymer comprising at least 95 wt%, based on the weight of the polypropylene, of repeating units derived from propylene (i.e., $--CH_2--CH(CH_3)--$ units). In some embodiments, the polypropylene comprises at least 98 wt%, based on the weight of the polypropylene, of repeating units derived from propylene. When the polypropylene is a copolymer of propylene and another copolymerizable monomer, the other copolymerizable monomer can be, for example, ethylene, a $C_4$-$C_{12}$ alkene, a $C_1$-$C_6$-alkyl acrylate, a $C_1$-$C_6$-alkyl methacrylate, or a mixture of two or more of the foregoing monomers. In some embodiments, the polypropylene is a homopolymer of propylene. The polypropylene can be syndiotactic, isotactic, or atactic. In some embodiments, the polypropylene is atactic.

In some embodiments, the polypropylene has a weight average molecular weight of at least 15,000 atomic mass units. In some embodiments, the weight average molecular weight is 15,000 to about 1,000,000 atomic mass units, specifically about 20,000 to about 500,000 atomic mass units, more specifically about 30,000 to about 300,000 atomic mass units. In some embodiments, the polypropylene is a high molecular weight species that is distinguished from low molecular weight "polypropylene waxes", which have been disclosed as lubricants for thermoplastics but characterized as "lack[ing] a clearly defined application profile in the processing of plastics". H. Zweifel, ed., "Plastics Additives Handbook, 5.sup.th Edition", Cincinnati: Hanser Gardner Publications, Inc., page 540 (2001).

In some embodiments, preferably the polypropylene used in the disclosure, is a propylene homopolymer.

In some embodiments, the melt temperature Tm of the polypropylene as determined using differential scanning calorimetry (DSC) is from about 140 to 180, for example from about 150 to about 165 °C, for example from about 155 to about 160 °C or the crystallization temperature (Tc) of the polypropylene as determined using DSC is from about 100 °C to about 120 °C, for example from about 105 to about 1 15 °C, for example from about 110 to about 115 °C. The melt temperature Tm or the crystallization temperature Tc can be measured using Differential Scanning Calorimetry according to ASTM D 3418-08 using a scan rate of 10 °C /min on a sample of 10 mg and using the second heating cycle.

In yet another embodiment, the melt temperature of the polypropylene is at least about 160 °C and for example at most about 200 °C, for example at most about 180 °C.

Polypropylene resin can be made by methods know to those skilled in the art. In addition, additives, such as those discussed above for PC resins, may be utilized with the polypropylene resins.

**Compatibilizer**

In some embodiments, the compatibilizers are hydrogenated styrene isoprene copolymer. Commercial compatibilizers include and Septon™ S1020 and Septon™ S2002 (each a hydrogenated styrenic block copolymer marketed

by Kuraray).

**Additional Components**

The thermoplastic composition can further include an impact modifier. Examples of impact modifiers include natural rubber, fluoroelastomers, ethylene-propylene rubber (EPR), ethylene-butene rubber, ethylene-propylene-diene monomer rubber (EPDM), acrylate rubbers, hydrogenated nitrile rubber (HNBR), silicone elastomers, styrene-butadiene-styrene (SBS), styrene-butadiene rubber (SBR), styrene-(ethylene-butene)-styrene (SEBS), acrylonitrile-butadiene-styrene (ABS), acrylonitrile-ethylene-propylene-diene-styrene (AES), styrene-isoprene-styrene (SIS), styrene-(ethylene-propylene)-styrene (SEPS), methyl methacrylate-butadiene-styrene (MBS), high rubber graft (HRG), and the like. Some suitable impact modifies include PC(polycarbonate)/ABS (such as Cycoloy PC/ABS) and MBS type formulations.

The additive composition can include an impact modifier, flow modifier, filler (e.g., a particulate polytetrafluoroethylene (PTFE), glass, carbon, mineral, or metal), reinforcing agent (e.g., glass fibers), antioxidant, heat stabilizer, light stabilizer, ultraviolet (UV) light stabilizer, UV absorbing additive, plasticizer, lubricant, release agent (such as a mold release agent), antistatic agent, anti-fog agent, antimicrobial agent, colorant (e.g, a dye or pigment), surface effect additive, radiation stabilizer, flame retardant, anti-drip agent (e.g., a PTFE-encapsulated styrene-acrylonitrile copolymer (TSAN)), or a combination comprising one or more of the foregoing. For example, a combination of a heat stabilizer, mold release agent, and ultraviolet light stabilizer can be used. In general, the additives are used in the amounts generally known to be effective. For example, the total amount of the additive composition (other than any impact modifier, filler, or reinforcing agent) can be 0.001 to 10.0 wt%, or 0.01 to 5 wt%, each based on the total weight of the polymer in the composition.

In addition to the polycarbonate, polypropylene (and any impact modifier), the thermoplastic composition can include various additives ordinarily incorporated into polymer compositions of this type, with the proviso that the additive(s) are selected so as to not significantly adversely affect the desired properties of the thermoplastic composition (good compatibility for example). Such additives can be mixed at a suitable time during the mixing of the components for forming the composition. Additives include fillers, reinforcing agents, antioxidants, heat stabilizers, light stabilizers, ultraviolet (UV) light stabilizers, plasticizers, lubricants, mold release agents, antistatic agents, colorants such as such as titanium dioxide, carbon black, and organic dyes, surface effect additives, radiation stabilizers, flame retardants, and anti-drip agents. A combination of additives can be used, e.g., a heat stabilizer, mold release agent, and ultraviolet light stabilizer. In general, the additives are used in the amounts generally known to be effective. For example, the total amount of the additives (other than any impact modifier, filler, or reinforcing agents) can be 0.01 to 5 wt.%, based on the total weight of the polycarbonate composition.

Heat stabilizer additives include organophosphites (e.g. triphenyl phosphite, tris-(2,6-dimethylphenyl)phosphite, tris-(mixed mono-and di-nonylphenyl)phosphite or the like), phosphonates (e.g, dimethylbenzene phosphonate or the like), phosphates (e.g., trimethyl phosphate, or the like), or combinations comprising at least one of the foregoing heat stabilizers. The heat stabilizer can be tris(2,4-di-t-butylphenyl) phosphate available as IRGAPHOS™ 168. Heat stabilizers are generally used in amounts of 0.01 to 5 wt%, based on the total weight of polymer in the composition.

There is considerable overlap among plasticizers, lubricants, and mold release agents, which include, for example, glycerol tristearate (GTS), phthalic acid esters (e.g, octyl-4,5-epoxy-hexahydrophthalate), tris-(octoxycarbonylethyl)isocyanurate, tristearin, di- or polyfunctional aromatic phosphates (e.g, resorcinol tetraphenyl diphosphate (RDP), the bis(diphenyl) phosphate of hydroquinone and the bis(diphenyl) phosphate of bisphenol A); poly-alpha-olefins; epoxidized soybean oil; silicones, including silicone oils (e.g., poly(dimethyl diphenyl siloxanes); esters, for example, fatty acid esters (e.g, alkyl stearyl esters, such as, methyl stearate, stearyl stearate, and the like), waxes (e.g, beeswax, montan wax, paraffin wax, or the like), or combinations comprising at least one of the foregoing plasticizers, lubricants, and mold release agents. These are generally used in amounts of 0.01 to 5 wt%, based on the total weight of the polymer in the composition.

Light stabilizers, in particular ultraviolet light (UV) absorbing additives, also referred to as UV stabilizers, include hydroxybenzophenones (e.g., 2-hydroxy-4-n-octoxy benzophenone), hydroxybenzotriazines, cyanoacrylates, oxanilides, benzoxazinones (e.g., 2,2'-(1,4-phenylene)bis(4H-3,1-benzoxazin-4-one, commercially available under the trade name CYASORB™ UV-3638 from Cytec), aryl salicylates, hydroxybenzotriazoles (e.g., 2-(2-hydroxy-5-methylphenyl)benzotriazole, 2-(2-hydroxy-5-tert-octylphenyl)benzotriazole, and 2-(2H-benzotriazol-2-yl)-4-(1,1,3,3-tetramethylbutyl)-phenol, commercially available under the trade name CYASORB™ 5411 from Cytec) or combinations comprising at least one of the foregoing light stabilizers. The UV stabilizers can be present in an amount of 0.01 to 1 wt%, specifically, 0.1 to 0.5 wt%, and more specifically, 0.15 to 0.4 wt%, based upon the total weight of polymer in the composition.

Possible fillers or reinforcing agents include, for example, mica, clay, feldspar, quartz, quartzite, perlite, tripoli, diatomaceous earth, aluminum silicate (mullite), synthetic calcium silicate, fused silica, fumed silica, sand, boron-nitride powder, boron-silicate powder, calcium sulfate, calcium carbonates (such as chalk, limestone, marble, and synthetic precipitated calcium carbonates) talc (including fibrous, modular, needle shaped, and lamellar talc), wollastonite, hollow

or solid glass spheres, silicate spheres, cenospheres, aluminosilicate or (armospheres), kaolin, whiskers of silicon carbide, alumina, boron carbide, iron, nickel, or copper, continuous and chopped carbon fibers or glass fibers, molybdenum sulfide, zinc sulfide, barium titanate, barium ferrite, barium sulfate, heavy spar, $TiO_2$, aluminum oxide, magnesium oxide, particulate or fibrous aluminum, bronze, zinc, copper, or nickel, glass flakes, flaked silicon carbide, flaked aluminum diboride, flaked aluminum, steel flakes, natural fillers such as wood flour, fibrous cellulose, cotton, sisal, jute, starch , lignin, ground nut shells, or rice grain husks, reinforcing organic fibrous fillers such as poly(ether ketone), polyimide, polybenzoxazole, poly(phenylene sulfide), polyesters, polyethylene, aromatic polyamides, aromatic polyimides, polyetherimides, polytetrafluoroethylene, and poly(vinyl alcohol), as well combinations comprising at least one of the foregoing fillers or reinforcing agents. The fillers and reinforcing agents can be coated with a layer of metallic material to facilitate conductivity, or surface treated with silanes to improve adhesion and dispersion with the polymer matrix. Fillers are used in amounts of 1 to 200 parts by weight, based on 100 parts by weight of based on 100 parts by weight of the total composition.

Antioxidant additives include organophosphites such as tris(nonyl phenyl)phosphite, tris(2,4-di-t-butylphenyl)phosphite, bis(2,4-di-t-butylphenyl)pentaerythritol diphosphite, distearyl pentaerythritol diphosphite; alkylated monophenols or polyphenols; alkylated reaction products of polyphenols with dienes, such as tetrakis[methylene(3,5-di-tert-butyl-4-hydroxyhydrocinnamate)] methane; butylated reaction products of para-cresol or dicyclopentadiene; alkylated hydroquinones; hydroxylated thiodiphenyl ethers; alkylidene-bisphenols; benzyl compounds; esters of beta-(3,5-di-tert-butyl-4-hydroxyphenyl)-propionic acid with monohydric or polyhydric alcohols; esters of beta-(5-tert-butyl-4-hydroxy-3-methylphenyl)-propionic acid with monohydric or polyhydric alcohols; esters of thioalkyl or thioaryl compounds such as distearylthiopropionate, dilaurylthiopropionate, ditridecylthiodipropionate, octadecyl-3 -(3,5 -di-tert-butyl-4-hydroxyphenyl)propionate, pentaerythrityl-tetrakis[3-(3,5-di-tert-butyl-4-hydroxyphenyl)propionate; amides of beta-(3,5-di-tert-butyl-4-hydroxyphenyl)-propionic acid, or combinations comprising at least one of the foregoing antioxidants. Antioxidants are used in amounts of 0.01 to 0.1 parts by weight, based on 100 parts by weight of the total composition, excluding any filler.

Useful flame retardants include organic compounds that include phosphorus, bromine, and/or chlorine. Non-brominated and non-chlorinated phosphorus-containing flame retardants can be preferred in certain applications for regulatory reasons, for example organic phosphates and organic compounds containing phosphorus-nitrogen bonds.

Inorganic flame retardants can also be used, for example salts of $C_{1-16}$ alkyl sulfonate salts such as potassium perfluorobutane sulfonate (Rimar salt), potassium perfluoroctane sulfonate, tetraethylammonium perfluorohexane sulfonate, and potassium diphenylsulfone sulfonate; salts such as $Na_2CO_3$, $K_2CO_3$, $MgCO_3$, $CaCO_3$, and $BaCO_3$, or fluoro-anion complexes such as $Li_3AlF_6$, $BaSiF_6$, $KBF_4$, $K_3AlF_6$, $KAlF_4$, $K_2SiF_6$, and/or $Na_3AlF_6$. When present, inorganic flame retardant salts are present in amounts of 0.01 to 10 parts by weight, more specifically 0.02 to 1 parts by weight, based on 100 parts by weight of the total composition, excluding any filler.

Anti-drip agents can also be used in the composition, for example a fibril forming or non-fibril forming fluoropolymer such as polytetrafluoroethylene (PTFE). The anti-drip agent can be encapsulated by a rigid copolymer, for example styrene-acrylonitrile copolymer (SAN). PTFE encapsulated in SAN is known as TSAN. A TSAN comprises 50 wt% PTFE and 50 wt% SAN, based on the total weight of the encapsulated fluoropolymer. The SAN can comprise, for example, 75 wt% styrene and 25 wt% acrylonitrile based on the total weight of the copolymer. Antidrip agents can be used in amounts of 0.1 to 10 parts by weight, based on 100 parts by weight of the total composition, excluding any filler.

The polycarbonate compositions can be manufactured by various methods known in the art. For example, powdered polycarbonate, and other optional components are first blended, optionally with any fillers, in a high speed mixer or by hand mixing. The blend is then fed into the throat of a twin-screw extruder via a hopper. Alternatively, at least one of the components can be incorporated into the composition by feeding it directly into the extruder at the throat and/or downstream through a sidestuffer, or by being compounded into a masterbatch with a desired polymer and fed into the extruder. The extruder is generally operated at a temperature higher than that necessary to cause the composition to flow. The extrudate can be immediately quenched in a water bath and pelletized. The pellets so prepared can be one-fourth inch long or less as desired. Such pellets can be used for subsequent molding, shaping, or forming.

Where a foam is desired, useful blowing agents include for example, low boiling halohydrocarbons and those that generate carbon dioxide; blowing agents that are solid at room temperature and when heated to temperatures higher than their decomposition temperature, generate gases such as nitrogen, carbon dioxide, and ammonia gas, such as azodicarbonamide, metal salts of azodicarbonamide, 4,4' oxybis(benzenesulfonylhydrazide), sodium bicarbonate, ammonium carbonate, or the like, or combinations comprising at least one of the foregoing blowing agents.

**Polymer Composition**

Some compositions comprise a) from about 55 wt% to about 85 wt% polycarbonate polymer; b) from about 10 wt% to about 30 wt% polypropylene polymer; and c) from about 2 wt% to about 15 wt% of a compatibilizer comprising hydrogenated styrene isoprene copolymer.

Yet other compositions comprise a) from about 66 wt% to about 82 wt% polycarbonate polymer; b) from about 16 wt% to about 22 wt% polypropylene polymer; and c) from about 2 wt% to about 12 wt% or about 2 wt% to 5 wt% or about 8 wt% to about 12 wt% of a compatibilizer.
The polymer compositions may additionally contain additives as described herein.
The polymer compositions can be formed by techniques known to those skilled in the art. Extrusion and mixing techniques, for example, may be utilized to combine the components of the polymer composition.
In some embodiments, extruding is preformed using a twin screw extruder. In certain embodiments, the extruder has a plurality of heated zones. With some methods, at least one heated zone has a temperature of about 500 to about 550 °F. With certain methods, the mixture is dried at a temperature less than 300 °C prior being extruded.

**Articles of Manufacture**

In one aspect, the present disclosure pertains to shaped, formed, or molded articles comprising the blended thermoplastic compositions. The blended thermoplastic compositions can be molded into useful shaped articles by a variety of means such as injection molding, extrusion, rotational molding, blow molding and thermoforming to form articles. The blended thermoplastic compositions described herein can also be made into film and sheet as well as components of laminate systems. In a further aspect, a method of manufacturing an article comprises melt blending the polycarbonate component, the impact modifier component, the flame retardant component, and the mineral filler component; and molding the extruded composition into an article. In a still further aspect, the extruding is done with a twin-screw extruder.
In a further aspect, the article is extrusion molded. In a still further aspect, the article is injection molded.

**Examples**

The disclosure is illustrated by the following non-limiting examples.

Physical Measurements

Physical measurements were made using the tests and test methods described herein. Unless specified to the contrary herein, all test standards are the most recent standard in effect at the time of filing this application.
Melt volume flow rate (often abbreviated MVR) measures the rate of extrusion of a thermoplastic through an orifice at a prescribed temperature and load. MVR is determined using ASTM D 1238.

Sample preparation

The additives may first be dry blended together, then feed into an extruder from one or multi-feeders, or separately feed into extruder from one or multi-feeders. The powder or pellet shaped organic polymer or any polymers combinations may be first dry blended with each other, or dry blended with any combination of foregoing mentioned fillers or additives, then feed into an extruder from one or multi-feeders, or separately feed into extruder from one or multi-feeders. The fillers used in the disclosure may also be first processed into a masterbatch, then feed into an extruder.
The organic polymers, additives, fillers and reinforcing agents, masterbatch or any combination of polymers, fillers, blends and the like may be fed into an extruder from throat hopper or any side feeders.
The extruders used in the disclosure may have a single screw, multiple screws, intermeshing co-rotating or counter rotating screws, non-intermeshing co-rotating or counter rotating screws, reciprocating screws, screws with pins, screws with screens, barrels with pins, rolls, rams, helical rotors, or combinations comprising at least one of the foregoing. The melt blending of the composites involves the use of shear force, extensional force, compressive force, ultrasonic energy, electromagnetic energy, thermal energy or combinations comprising at least one of the foregoing forces or forms of energy.
The barrel temperature on the extruder during compounding can be set at the temperature where at least a portion of the organic polymer has reached a temperature greater than or equal to about the melting temperature, if the resin is a semi-crystalline organic polymer, or the flow point (e.g., the glass transition temperature) if the resin is an amorphous resin.
The moldable composition comprising the foregoing mentioned organic polymer and the fillers may be subject to multiple blending and forming steps if desirable. For example, the moldable composition may first be extruded and formed into pellets. The pellets may then be fed into a molding machine where it may be formed into any desirable shape or product. Alternatively, the moldable composition emanating from a single melt blender may be formed into sheets or strands and subjected to post-extrusion processes such as annealing, uniaxial or biaxial orientation.
Solution blending may also be used to manufacture the moldable composition. The solution blending may also

use additional energy such as shear, compression, ultrasonic vibration, or the like, to promote homogenization of fillers with the organic polymer. In one embodiment, an organic polymer suspended in a fluid may be introduced into an ultrasonic sonicator along with any foregoing fillers. The mixture may be solution blended by sonication for a time period effective to disperse the fillers into the organic polymers. The organic polymer along with the fillers may then be dried, extruded and molded if desired.

In the examples, samples were prepared using a Twin screw extruder (Toshiba TEM-37BS, L/D=40.5), the temperature of the extruder barrel was set at 260 °C. Pellets extruded from extruder were then injection molded into 10*10*0.8mm bars were molded for FR measurement and 80*10*3mm bars were molded then cut into 10*10*3mm square sample for through plane TC measurement.

**Results**

Compatibility Studies

The compatibility of blends was first evaluated by extrusion process, then by a delamination tool in injection molding process. The tool is a center gated disk mold which induces high shear flow when polymer melt is injected into the mold. In both extrusion and injection molding process, the products was evaluated and rated. In case of extrusion, the long tailed pellet or peel of melt strand or pearlescent gloss of the pellets are indications of severe incompatibility. In injection molding process, the delamination of the part into layered structure is an indication.

Extrusion was carried out on a WERNER & PFLEIDERER 30mm co-rotating twin screw extruder. The temperature profile and settings for extrusion is listed in **Table** 1. In some extreme cases, there was problem in stranding and pelletizing the extrudates. If the extrusion process ran well, after extrusion the pellets were evaluated based on the shape and appearance. As in **Fig. 1,** the rating for each situation is marked in the photograph as "good" vs. "bad".

**Table 1**

| Parameters | Unit of measure (uom) | Set value |
|---|---|---|
| Zone 1 temperature | °F | 350 |
| Zone 2 temperature | °F | 450 |
| Zone 3 temperature | °F | 500 |
| Zone 4 temperature | °F | 575 |
| Zone 5 temperature | °F | 575 |
| Zone 6 temperature | °F | 575 |
| Zone 7 temperature | °F | 575 |
| Screw speed | rpm | 500 |

Injection molding process was run on a Van Dorn 80 Ton injection molding machine. Settings for both standard molding and delamination tool molding are listed in **Table** 2. For the delamination tool study, the molded disks were evaluated to check whether there was obvious delamination, and further if flexed. A multiple-blind evaluation of delamination samples was performed visually using center gated disks, comparing experimental samples to a library of standards. Center gated disks were molded on a Van Dorn 80 Ton injection molding machine using delmination tool molding condition, where the disk had a nominal thickness and diameter of 102 mm and 2 mm, respectively, and a sprue that is perpendicular to the disk surface, having a nominal diameter of 8 mm and length of 85 mm. The library of samples for comparison was created by manually folding a range of disks in half and applying a rating to the extent of delamination, here: "good" and "bad". Flexing was performed at ambient temperature. The disk rated as "bad" broke just by one bending and layered structure was revealed by the fractures. **Fig. 2** shows the image of a delaminated disk which is rated as "bad". Also showed in **Fig. 2** is a disk which is rated as "good". The disk was flexed multiple times and no fracture happened. In addition, in the good disk, it was very difficult to peel any layer off from the disk.

**Table 2**

| No. | Parameter | UOM | Standard | Delamination |
|---|---|---|---|---|
| 1 | Cnd: Pre-drying time | Hour | 4 | 4 |
| 2 | Cnd: Pre-drying temp | °F | 225 | 225 |

(continued)

| No. | Parameter | UOM | Standard | Delamination |
|---|---|---|---|---|
| 3 | Hopper temp | °F | Room Temp. | Room Temp. |
| 4 | Zone 1 temp | °F | 525 | 525 |
| 5 | Zone 2 temp | °F | 525 | 525 |
| 6 | Zone 3 temp | °F | 525 | 525 |
| 7 | Zone 4 temp | °F | 525 | 525 |
| 8 | Nozzle temp | °F | 525 | 525 |
| 9 | Mold temp | °F | 170 | 170 |
| 10 | Screw speed | rpm | 100 | 100 |
| 11 | Injection speed | in/s | 2 | 6 |

**Table 3** and **4** are the formulations evaluated by extrusion process. The compatibility of polycarbonate and polypropylene is rated in these blends, with "good" as acceptable to carry on to next step - molding study, and "bad" as poor compatibility, not suitable for further study. For both polypropylene homo-polymer and impact modified polypropylene from SABIC, four compatibilizers were selected for next step of injection molding with the delamination tool study.

**Table 5** lists the molding study results of selected formulations from **Table 3** and **Table 4.** All formulations in **Table 5** were able to be extruded and molded into standard ASTM and ISO testing parts. However, if molded in the delamination tool with an injection speed of 6 in/s, the parts all showed delamination.

**Table 6** lists the formulation with Flint Hills impact modified PP and various block copolymer as compatibilizers. All formulation listed in **Table 6** could be extruded without any problem, however when molded in the delamination tool, they all showed delamination when the parts were flexed.

**Table 7** lists the formulations with Braskem™ PP homo polymer and SABIC HFD polycarbonate (a sebacic acid and BPA polycarbonate copolymer). All the formulations were extruded without any problem. Also molding in the delamination tool with high injection speed 6 in/s resulted in very tough disks which were difficult to break and difficult to separate into layers.

**Table 8** shows formulations using Septon™ as compatibilizers. For Septon ™ S2007, Septon ™ S2104, Septon ™ S8004 (each a hydrogenated styrenic block copolymer), their compatibilization effect are similar to that of Kraton™ FG1901G (a linear triblock copolymer based on styrene and ethylene/butylene with a polystyrene content of 30%). However, for Septon HG252, the formulation was not able to pelletize during extrusion process.

**Table 9** lists the formulations using Polybond™ products as compatibilizers. The polycarbonate in the formulation is polycarbonate homo polymer. All formulations could extrude well. However, when molded in the delamination tool with high injection speed 6 in/s, the parts showed delamination when flexed.

**Table 10** shows the formulation with HFD polycarbonate copolymer and Kraton™, Licocene™ as compatibilizers. It was observed that the HFD polycarbonate and Kraton FG1901G combination gave the best compatibility with both Braskem™ homo polypropylene and Flint Hills impact modified polypropylene.

**Table 11** presents the results of blends from HFD polycarbonate, Braskem™ TI4003F polypropylene and Kraton FG1901G, plus R7 treated talc (obtained from JetFine™ 3CA from Luzenac America Inc.). All formulations could be extruded very well and had very good compatibility evaluated by injection molding process with the delamination tool.

**Table 12** listed the formulations and evaluation results of blends with glass fibers. All formulations could be extruded without any problem. However, delamination was observed on molded disks with high injection speed, center gated disk molding. High injection speed means 6 in/s (delamination molding profile; Table 2)

**Table 3. Compatibility evaluation of PC/PP (homopolymer) by extrusion process**

| | Item Description | Unit | #1 | #2 | #3 | #4 | #5 | #6 | #7 | #8 | #9 | #10 | #11 | #12 | #13 | #14 |
|---|---|---|---|---|---|---|---|---|---|---|---|---|---|---|---|---|
| Compatibilizers | Licocene™ PP MA 6252 | % | 2 | | | | | | | | | | | | | |
| | Licocene™ PP MA 6452 | % | | 2 | | | | | | | | | | | | |
| | Licocene™ PP MA 7452 | % | | | 2 | | | | | | | | | | | |
| | Ricon™ 131MA20 | % | | | | 2 | | | | | | | | | | |
| | SMA 1000P | % | | | | | 2 | | | | | | | | | |
| | Septon™ S1020 | % | | | | | | 2 | | | | | | | | |
| | Septon™ S8076 | % | | | | | | | 10 | | | | | | | |
| | Septon™ V9827 | % | | | | | | | | 10 | | | | | | |
| | Kraton™ FG1901G | % | | | | | | | | | 10 | | | | | |
| | Kraton™ FG1924G | % | | | | | | | | | | 10 | | | | |
| | SEPTON™ S2002 | % | | | | | | | | | | | 10 | | | |
| | Krasol™ HLBH-P 2000 | % | | | | | | | | | | | | 2 | | |
| | Krasol™ HLBH-P 3000 | % | | | | | | | | | | | | | 2 | |
| Stab 1 | Irganox™ 1076 | % | 0.5 | 0.5 | 0.5 | 0.5 | 0.5 | 0.5 | 0.5 | 0.5 | 0.5 | 0.5 | 0.5 | 0.5 | 0.5 | 0.5 |
| Stab 2 | Seenox™ 412S | % | 0.2 | 0.2 | 0.2 | 0.2 | 0.2 | 0.2 | 0.2 | 0.2 | 0.2 | 0.2 | 0.2 | 0.2 | 0.2 | 0.2 |
| Stab 3 | Irgafos™ 168 | % | 0.1 | 0.1 | 0.1 | 0.1 | 0.1 | 0.1 | 0.1 | 0.1 | 0.1 | 0.1 | 0.1 | 0.1 | 0.1 | 0.1 |
| PC 1 | Lexan™ PC CC017 | % | 77.2 | 77.2 | 77.2 | 77.2 | 77.2 | 77.2 | 69.2 | 69.2 | 69.2 | 69.2 | 69.2 | 77.2 | 77.2 | 79.2 |
| PP 1 | SABIC PP homopolymer | % | 20 | 20 | 20 | 20 | 20 | 20 | 20 | 20 | 20 | 20 | 20 | 20 | 20 | 20 |
| | Formulation Total | | 100 | 100 | 100 | 100 | 100 | 100 | 100 | 100 | 100 | 100 | 100 | 100 | 100 | 100 |
| | Compatibility | | bad | good | good | bad | good | good | bad | bad | bad | bad | bad | good | bad | bad |

**Table 4. Compatibility evaluation of PC/PP (Impact modified PP) by extrusion process**

| | Item Description | Unit | #15 | #16 | #17 | #18 | #19 | #20 | #21 | #22 | #23 | #24 | #25 | #26 | #27 | #28 |
|---|---|---|---|---|---|---|---|---|---|---|---|---|---|---|---|---|
| Compatibilizers | Licocene™ PP MA 6252 | % | 2 | | | | | | | | | | | | | |
| | Licocene™ PP MA 6452 | % | | 2 | | | | | | | | | | | | |
| | Licocene™ PP MA 7452 | % | | | 2 | | | | | | | | | | | |
| | Ricon™ 131MA20 | % | | | | 2 | | | | | | | | | | |
| | SMA 1000P | % | | | | | 2 | | | | | | | | | |
| | Septon™ S1020 | % | | | | | | 2 | | | | | | | | |
| | Septon™ S8076 | % | | | | | | | 10 | | | | | | | |
| | Septon™ V9827 | % | | | | | | | | 10 | | | | | | |
| | Kraton™ FG1901G | % | | | | | | | | | 10 | | | | | |
| | Kraton™ FG1924G | % | | | | | | | | | | 10 | | | | |
| | SEPTON™ S2002 | % | | | | | | | | | | | 10 | | | |
| | Krasol™ HLBH-P 2000 | % | | | | | | | | | | | | 2 | | |
| | Krasol™ HLBH-P 3000 | % | | | | | | | | | | | | | 2 | |
| Stab 1 | Irganox™ 1076 | % | 0.5 | 0.5 | 0.5 | 0.5 | 0.5 | 0.5 | 0.5 | 0.5 | 0.5 | 0.5 | 0.5 | 0.5 | 0.5 | 0.5 |
| Stab 2 | Seenox™ 412S | % | 0.2 | 0.2 | 0.2 | 0.2 | 0.2 | 0.2 | 0.2 | 0.2 | 0.2 | 0.2 | 0.2 | 0.2 | 0.2 | 0.2 |
| Stab 3 | Irgafos™ 168 | % | 0.1 | 0.1 | 0.1 | 0.1 | 0.1 | 0.1 | 0.1 | 0.1 | 0.1 | 0.1 | 0.1 | 0.1 | 0.1 | 0.1 |
| PC 1 | Lexan™ PC CC017 | % | 77.2 | 77.2 | 77.2 | 77.2 | 77.2 | 77.2 | 69.2 | 69.2 | 69.2 | 69.2 | 69.2 | 77.2 | 77.2 | 79.2 |
| PP 2 | SABIC PP (Impact modified) | % | 20 | 20 | 20 | 20 | 20 | 20 | 20 | 20 | 20 | 20 | 20 | 20 | 20 | 20 |
| | Formulation Total | | 100 | 100 | 100 | 100 | 100 | 100 | 100 | 100 | 100 | 100 | 100 | 100 | 100 | 100 |
| | Compatibility bv extrusion | | good | good | bad | bad | good | good | bad | bad | bad | bad | bad | good | bad | bad |

**Table 5. Physical and mechanical testing of selected formulations**

| Item Code | Item Description | Unit | #29 | #30 | #31 | #32 | #33 | #34 | #35 | #36 |
|---|---|---|---|---|---|---|---|---|---|---|
| PP | Sabic PP homopolymer | % | 20 | | 20 | | 20 | | 20 | |
| | Sabic PP (impact modified) | % | | 20 | | 20 | | 20 | | 20 |
| Compatibilizer | Septon™ S1020 | % | | | 10 | 10 | | | | |
| | Krasol™ 2000 | % | 2 | 2 | | | | | | |
| | Licocene™ PP MA 6452 | % | | | | | 2 | 2 | | |
| | SMA 1000P | % | | | | | | | 2 | 2 |
| Stab 1 | Irganox™ 1076 | % | 0.5 | 0.5 | 0.5 | 0.5 | 0.5 | 0.5 | 0.5 | 0.5 |
| Stab 2 | Seenox™ 412S | % | 0.2 | 0.2 | 0.2 | 0.2 | 0.2 | 0.2 | 0.2 | 0.2 |
| Stab 3 | Irgafos™ 168 | % | 0.1 | 0.1 | 0.1 | 0.1 | 0.1 | 0.1 | 0.1 | 0.1 |
| PC 1 | Lexan™ PC CC017 | % | 77.2 | 77.2 | 69.2 | 69.2 | 77.2 | 77.2 | 77.2 | 77.2 |
| | Formulation total | | 100 | 100 | 100 | 100 | 100 | 100 | 100 | 100 |
| **Test standard** | **Test Description** | **Unit** | **#29** | **#30** | **#31** | **#32** | **#33** | **#34** | **#35** | **#36** |
| MVR; ASTM D1238 | 260C/5kg/ 360S | $cm^3$/ 10 min | 44.3 | 68.7 | 31 | 32.7 | 54 | 61.1 | 38.9 | 41.6 |
| | 260C/5kg/ 1080S | $cm^3$/ 10 min | 50.3 | 80.4 | 33.7 | 35.4 | 52.9 | 63 | 38.8 | 43 |
| Flex; ISO 178 | Flex Modulus | MPa | 1920. 4 | 1876. 2 | 1746 | 1647. 4 | 2100 | 2003. 4 | 2140. 2 | 2051 |
| | Flex Strength | Mpa | 67.76 | 63.56 | 60.65 | 56.8 | 75.0 7 | 68.45 | 79.92 | 73.8 7 |
| HDT; ISO 75 | 1.8Mpa, 3.2mm | °C | 110.9 | 111 | 110.4 | 109.9 | 113. 5 | 111.8 | 115.3 | 116. 1 |
| Izod; Notched ISO 180 | Ductility | % | 100 | 100 | 100 | 100 | 100 | 100 | 100 | 100 |
| | Impact Strength | $kJ/m^2$ | 22.93 | 25.17 | 51.69 | 59.2 | 31.7 3 | 21.53 | 23.1 | 46.3 |
| MAI; ASTM 3763 | Ductility | % | 40 | 0 | 0 | 100 | 20 | 100 | 100 | 100 |
| | Energy, @ max loading | J | 8.92 | 8.12 | 11.7 | 33.2 | 4.12 | 4.63 | 8.78 | 9.2 |
| Tensile; ISO 527 | Tensile Modulus | Mpa | 1844 | 1810 | 1706 | 1602 | 1990 | 1918 | 2008 | 1962 |
| | Stress @ Yield | Mpa | 44.58 | 42.82 | 41.6 | 39.48 | 50.0 4 | 46.82 | 51.12 | 48.3 |
| | Strain @ Yield | % | 6 | 5.64 | 6.04 | 5.72 | 5.8 | 5.34 | 5.56 | 5.38 |
| | Strain @ Break | % | 11.58 | 9.06 | 23.24 | 16.78 | 8.68 | 10.02 | 46.18 | 30.4 |

(continued)

| Test standard | Test Description | Unit | #29 | #30 | #31 | #32 | #33 | #34 | #35 | #36 |
|---|---|---|---|---|---|---|---|---|---|---|
| Delamination by injection mold with center gated disk tool | | | bad | bad | bad | bad | bad | bad | bad | Bad |

Table 6.

| Item Code | Item Description | Unit | #37 | #38 | #39 | #40 | #41 | #42 | #43 |
|---|---|---|---|---|---|---|---|---|---|
| PC 1 | Lexan™ PC CC017 | % | 79.8 | 69.8 | 69.8 | 69.8 | 69.8 | 69.8 | 69.8 |
| PP 3 | Flint Hills P6E2A-005 PP | % | 20 | 20 | 20 | 20 | 20 | 20 | 20 |
| Compatibilizers | Septon™ S1020 | % | | 10 | | | | | |
| | Septon™ S2002 | % | | | 10 | | | | |
| | Septon™ S8076 | % | | | | 10 | | | |
| | Septon™ V9827 | % | | | | | 10 | | |
| | Kraton™ FG1901G | % | | | | | | 10 | |
| | Kraton ™ FG1924G | % | | | | | | | 10 |
| Stab 3 | Irgafos™ 168 | % | 0.2 | 0.2 | 0.2 | 0.2 | 0.2 | 0.2 | 0.2 |
| Compatibility by extrusion | | | good | good | good | good | good | good | good |
| Delamination by injection mold with center gated disk tool | | | bad | bad | bad | bad | bad | bad | bad |

Table 7.

| Item Code | Item Description | Unit | #44 | #45 | #46 |
|---|---|---|---|---|---|
| PC 2 | HFD PC copolymer | % | 79.8 | 69.8 | 69.8 |
| PP 4 | Braskem™ F006EC2 | % | 20 | 20 | 20 |
| Compatibilizers | Kraton™ FG1901G | % | | 10 | |
| | Kraton™ FG1924G | % | | | 10 |
| Stab 3 | Irgafos™ 168 | % | 0.2 | 0.2 | 0.2 |
| Formulation total | | | 100 | 100 | 100 |
| **Test standard** | **Test Description** | **Unit** | **#44** | **#45** | **#46** |
| MVR; ASTM D1238 | 260C/5kg/360S | $cm^3$/10 min | 10.2 | 18.3 | 19.4 |
| | 260C/5kg/1080S | $cm^3$/10 min | 11.8 | 20.5 | 20 |
| HDT; ISO 75 | 1.8Mpa, 3.2mm | °C | 102.4 | 97.3 | 95.3 |
| Izod; Notched ISO 180 | Ductility | % | 100 | 100 | 100 |
| | Impact Strength | $kJ/m^2$ | 52.1 | 83.74 | 89.58 |

Table 8.

| Item Code | Item Description | Unit | #47 | #48 | #49 | #50 | #51 |
|---|---|---|---|---|---|---|---|
| PC 2 | HFD PC copolymer | % | 69.2 | 69.2 | 69.2 | 69.2 | 69.2 |
| PP 4 | Braskem™ F006EC2 | % | 20 | 20 | 20 | 20 | 20 |
| Compatibilizers | Kraton™ FG1901G | % | 10 | | | | |
| | Septon™ S2007 | % | | 10 | | | |
| | Septon™ S2104 | % | | | 10 | | |
| | Septon™ S8004 | % | | | | 10 | |
| | Septon™ HG252 | % | | | | | 10 |
| Stab 1 | Irganox™ 1076 | % | 0.5 | 0.5 | 0.5 | 0.5 | 0.5 |

(continued)

| Item Code | Item Description | Unit | #47 | #48 | #49 | #50 | #51 |
|---|---|---|---|---|---|---|---|
| Stab 2 | Seenox™ 412S | % | 0.2 | 0.2 | 0.2 | 0.2 | 0.2 |
| Stab 3 | Irgafos™ 168 | % | 0.1 | 0.1 | 0.1 | 0.1 | 0.1 |
| Formulation total | | | 100 | 100 | 100 | 100 | 100 |
| **Test standard** | **Test Description** | **Unit** | **#47** | **#48** | **#49** | **#50** | **#51** |
| MVR; ASTM D1238 | 260C/5kg/360S | $cm^3$/10 min | 18.5 | 16.1 | 16.1 | 12.9 | - |
| | 260C/5kg/1080S | $cm^3$/10 min | 20 | 17.5 | 17.8 | 15.6 | - |
| HDT; ISO 75 | 1.8Mpa, 3.2mm | °C | 94.8 | 98.9 | 99.9 | 100.8 | - |
| Flex; ISO 178 | Flex Modulus | MPa | 1337.8 | 1421.4 | 1659 | 1461.4 | - |
| | Flex Strength | Mpa | 52.3 | 56.13 | 64.53 | 56.71 | - |
| Izod; Notched ISO 180 | Ductility | % | 100 | 100 | 100 | 100 | - |
| | Impact Strength | $kJ/m^2$ | 64.43 | 77.48 | 76.95 | 54.43 | - |
| Compatibility by extrusion | | | good | good | good | good | bad |
| Delamination by injection mold with center gated disk tool | | | good | good | good | good | bad |

Table 9.

| Item Code | Item Description | Unit | #52 | #53 | #54 | #55 | #56 | #57 | #58 | #59 | #60 | #61 |
|---|---|---|---|---|---|---|---|---|---|---|---|---|
| PC 1 | Lexan™ PC CC017 | % | 77.2 | 77.2 | 77.2 | 77.2 | 77.2 | 74.2 | 74.2 | 74. 2 | 74.2 | 74.2 |
| PP 4 | Braskem™ F006EC2 | % | 20 | 20 | 20 | 20 | 20 | 20 | 20 | 20 | 20 | 20 |
| Compatibili zers | Polybond™ 1002 | % | 2 | | | | | 5 | | | | |
| | Polybond™ 1103 | % | | 2 | | | | | 5 | | | |
| | Polybond™ 3002 | % | | | 2 | | | | | 5 | | |
| | Polybond™ 3150 | % | | | | 2 | | | | | 5 | |
| | Polybond™ 3200 | % | | | | | 2 | | | | | 5 |
| Stab 1 | Irganox™ 1076 | % | 0.5 | 0.5 | 0.5 | 0.5 | 0.5 | 0.5 | 0.5 | 0.5 | 0.5 | 0.5 |
| Stab 2 | Seenox™ 412S | % | 0.2 | 0.2 | 0.2 | 0.2 | 0.2 | 0.2 | 0.2 | 0.2 | 0.2 | 0.2 |
| Stab 3 | Irgafos™ 168 | % | 0.1 | 0.1 | 0.1 | 0.1 | 0.1 | 0.1 | 0.1 | 0.1 | 0.1 | 0.1 |
| Formulation total | | | 100 | 100 | 100 | 100 | 100 | 100 | 100 | 100 | 100 | 100 |
| **Test standard** | **Test Description** | **Unit** | **#52** | **#53** | **#54** | **#55** | **#56** | **#57** | **#58** | **#59** | **#60** | **#61** |
| MVR; ASTM D1238 | 260C/5kg/36 0S | $cm^3$/ 10 min | 29.9 | 31.6 | 29 | 31.1 | 31.2 | 31.7 | 32.9 | 31. 2 | 32.5 | 37.3 |
| | 260C/5kg/10 80S | $cm^3$/ 10 min | 30.2 | 32.6 | 30.1 | 31.7 | 32.5 | 30.7 | 35.3 | 31. 7 | 31.7 | 36.7 |
| HDT; ISO 75 | 1.8Mpa, 3.2mm | °C | 108. 4 | 108. 8 | 108. 8 | 107. 7 | 110 | 108.9 | 109. 7 | 108 | 109 | 107.7 |
| Flex; ISO 178 | Flex Modulus | MPa | 1969 .8 | 1996 .6 | 2002 .6 | 1970 .8 | 1966 .2 | 1955 | 1984 .2 | 193 3.4 | 1935 .4 | 1914. 6 |
| | Flex Strength | Mpa | 68.3 8 | 69.8 1 | 69.1 1 | 67.9 2 | 67.7 4 | 66.49 | 68.4 6 | 66. 6 | 66.6 | 66.55 |
| Izod; Notched ISO 180 | Ductility | % | 100 | 100 | 100 | 100 | 100 | 100 | 100 | 100 | 100 | 100 |
| | Impact Strength | kJ/m 2 | 13.7 4 | 14.7 6 | 14.4 9 | 14.3 7 | 13.7 6 | 11.57 | 12.5 4 | 12. 69 | 12.5 9 | 11.86 |
| Compatibility by extrusion | | | good | good | good | good | good | good | good | goo d | good | good |
| Delamination by injection mold with center gated disk tool | | | bad | bad | bad | bad | bad | bad | bad | bad | bad | bad |

Table 10.

| Item Code | Item Description | Unit | #62 | #63 | #64 | #65 | #66 | #67 |
|---|---|---|---|---|---|---|---|---|
| PC 2 | HFD PC copolymer | % | 69.2 | 69.2 | 76.2 | 76.2 | 79.2 | 79.2 |
| PP 3 | Flint Hills P6E2A-005 PP | | 20 | | 20 | | 20 | |
| PP 4 | Braskem™ F006EC2 | % | | 20 | | 20 | | 20 |
| Compatibilizers | Kraton™ FG1901G | % | 10 | 10 | | | | |
| | Licocene™ PP MA 7452 | % | | | 3 | 3 | | |
| Stab 1 | Irganox™ 1076 | % | 0.5 | 0.5 | 0.5 | 0.5 | 0.5 | 0.5 |
| Stab 2 | Seenox™ 412S | % | 0.2 | 0.2 | 0.2 | 0.2 | 0.2 | 0.2 |
| Stab 3 | Irgafos™ 168 | % | 0.1 | 0.1 | 0.1 | 0.1 | 0.1 | 0.1 |
| Formulation total | | | 100 | 100 | 100 | 100 | 100 | 100 |
| Compatibility by extrusion | | | good | good | good | good | good | good |
| Delamination by injection mold with center gated disk tool | | | good | good | bad | bad | bad | bad |

Table 11

| Item Code | Item Description | Unit | #68 | #69 | #70 | #71 |
|---|---|---|---|---|---|---|
| PC 2 | HFD PC copolymer | % | 76.2 | 74.2 | 68.2 | 60.2 |
| PP 5 | Braskem™ TI4003F | % | 15 | 15 | 15 | 15 |
| Compatibilizers | Kraton™ FG1901G | % | 7.5 | 7.5 | 7.5 | 7.5 |
| Filler | R7 Talc | % | | 2 | 8 | 16 |
| Stab 1 | Irganox™ 1076 | % | 0.5 | 0.5 | 0.5 | 0.5 |
| Stab 2 | Seenox™ 412S | % | 0.2 | 0.2 | 0.2 | 0.2 |
| Stab 3 | Irgafos™ 168 | % | 0.1 | 0.1 | 0.1 | 0.1 |
| Formulation total | | | 100 | 100 | 100 | 100 |
| **Test standard** | **Test Description** | **Unit** | **#68** | **#69** | **#70** | **#71** |
| MVR; ASTM D1238 | 260C/5kg/360S | $cm^3$/10 min | 12.7 | 11.8 | 11.6 | 11 |
| | 260C/5kg/1080S | $cm^3$/10 min | 14.3 | 12.9 | 12.7 | 12.7 |
| HDT; ISO 75 | 1.8Mpa, 3.2mm | °C | 102.7 | 101.7 | 100.3 | 96.7 |
| Flex; ISO 178 | Flex Modulus | MPa | 1603.2 | 1626 | 1600.8 | 1613 |
| | Flex Strength | Mpa | 57.41 | 57.94 | 54.91 | 53.34 |
| Izod; Notched ISO 180 | Ductility | % | 100 | 100 | 100 | 100 |
| | Impact Strength | kJ/m2 | 85.6 | 76.7 | 61.2 | 54.5 |
| MAI; ASTM 3763 | Ductility | % | 100 | 100 | 100 | 100 |
| | Energy, @ max loading | J | 40.2 | 37.9 | 34.5 | 33 |
| Tensile; ISO 527 | Tensile Modulus | Mpa | 1572 | 1600 | 1556 | 1554 |
| | Stress @ Yield | Mpa | 40.14 | 40.38 | 38.32 | 36.92 |
| | Strain @ Yield | % | 6.22 | 6.22 | 6.72 | 7.32 |
| | Strain @ Break | % | 121.14 | 99.22 | 95.88 | 105.48 |
| Compatibility by extrusion | | | good | good | good | good |

(continued)

| Test standard | Test Description | Unit | #68 | #69 | #70 | #71 |
|---|---|---|---|---|---|---|
| Delamination by injection mold with center gated disk tool | | | good | good | good | good |

Table 12

| Item Code | Item Description | Unit | #72 | #73 | #74 | #75 |
|---|---|---|---|---|---|---|
| PC 1 | Lexan™ PC CC017 | % | | | 69.7 | 64.7 |
| PC 2 | HFD PC copolymer | % | 63.7 | 58.7 | | |
| PP 5 | Braskem™ TI4003F | % | 20 | 20 | 20 | 20 |
| Compatibilizers | Kraton™ FG1901G | % | 10 | 10 | | |
| | Licocene™ PP MA 6452 | % | | | 4 | 4 |
| Filler | Nonbonding glass | % | 5 | 10 | 5 | 10 |
| Stab 1 | Irganox™ 1076 | % | 0.5 | 0.5 | 0.5 | 0.5 |
| Stab 2 | Seenox™ 412S | % | 0.2 | 0.2 | 0.2 | 0.2 |
| Stab 3 | Irgafos™ 168 | % | 0.1 | 0.1 | 0.1 | 0.1 |
| Formulation total | | | 100 | 100 | 100 | 100 |
| Compatibility by extrusion | | | good | good | good | good |
| Delamination by injection mold with center gated disk tool | | | bad | bad | bad | bad |

Delamination Study

To further investigate the influence of PP and SEBS contents on the compatibility (e.g., delamination at the disk gate) of PC/PP blends, a design of experiment (DOE) was conducted via the extrusion and molding of a series of PC/PP blends with various PP and SEBS loading levels. We note here that probability of delamination free at the disk gate was listed as continuous data, which was transformed using statistical software (e.g., Minitab) based on binary discrete data collected by visually rating as-molded center-gated disks as "good" and "bad" for the disks with regards to delamination. For example, disks with no delamination after molding and flexing were considered as "good" samples, whereas disks showing delamination after flexing were rated as "bad". Some samples already displayed delamination after molding without flexing and were not evaluated further.

Plots of probability of delamination free at the gate of the center-gated disks as a function of both Kraton SEBS and PP contents were obtained. Minimal levels of PP and Kraton™ SEBS contents (e.g., ~15-40% and ~2-12%, respectively) were required for the disks rated as "good" based on the probability of delamination free at disk gate. These results also suggest that a loading level of PP at ~15-40%, when combined with loading contents of Kraton™ pereferably at ~2-5 and ~8-12% resulted in the optimized compatibility of PC/PP blends with regards to no delamination for the center-gated disks. Additional experiments were conducted to evaluate the influence of mineral fillers (e.g., talc) on the compatibility of PC/PP blends. Graphs of probability of delamination free at disk gate as function of PP and Kraton™ contents were produced. These results indicated that the addition of mineral fillers such as talc at the loading level studied (0-20%) led to minimal effects on the compatibility of PC/PP blends with regards to delamination at the disk gate.

**Definitions**

Unless defined otherwise, all technical and scientific terms used herein have the same meaning as commonly understood by one of ordinary skill in the art to which this disclosure belongs. In this specification and in the claims which follow, reference will be made to a number of terms which shall be defined herein.

As used in the specification and the appended claims, the singular forms "a," "an" and "the" include plural equivalents unless the context clearly dictates otherwise. Thus, for example, reference to "a polycarbonate polymer" includes mixtures of two or more polycarbonate polymers.

As used herein, the term "combination" is inclusive of blends, mixtures, alloys, reaction products, and the like.

Ranges can be expressed herein as from one particular value, and/or to another particular value. When such

a range is expressed, another aspect includes from the one particular value and/or to the other particular value. Similarly, when values are expressed as approximations, by use of the antecedent 'about,' it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. As used herein, the terms "about" and "at or about" mean that the amount or value in question can be the value designated some other value approximately or about the same. It is generally understood, as used herein, that it is the nominal value indicated ±5% variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.

References in the specification and concluding claims to parts by weight, of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

As used herein the terms "weight percent," "wt. %," and "wt. %" of a component, which can be used interchangeably, unless specifically stated to the contrary, are based on the total weight of the formulation or composition in which the component is included. For example if a particular element or component in a composition or article is said to have 8% by weight, it is understood that this percentage is relative to a total compositional percentage of 100% by weight.

As used herein, the terms "weight average molecular weight" or "Mw" can be used interchangeably, and are defined by the formula:

$$M_w = \frac{\sum N_i M_i^{\,2}}{\sum N_i M_i},$$

where $M_i$ is the molecular weight of a chain and $N_i$ is the number of chains of that molecular weight. Compared to $M_n$, $M_w$ takes into account the molecular weight of a given chain in determining contributions to the molecular weight average. Thus, the greater the molecular weight of a given chain, the more the chain contributes to the $M_w$. $M_w$ can be determined for polymers, e.g. polycarbonate polymers, by methods well known to a person having ordinary skill in the art using molecular weight standards, e.g. polycarbonate standards or polystyrene standards, preferably certified or traceable molecular weight standards.

The abbreviation "°F" stands for degrees Fahrenheit.

The abbreviation "°C" stands for degrees Centigrade.

"rpm" is revolutions per minute.

The unit "in/s" is inch(es) per second.

"$cm^3$" is centimeters cubed.

The unit "m" stands for meter(s).

"min" is minute(s).

"MPa" stands for megapascal.

"J" is the abbreviation for Joule(s).

"kJ" is the abbreviation for kilojoule.

## Claims

**1.** A polymer composition comprising:

a) from 55 wt%, ±5 %, to 85 wt%, ±5 %, polycarbonate polymer;
b) from 10 wt%, ±5 %, to 40 wt%, ±5 %, polypropylene polymer; and
c) from 2 wt%, ±5 %, to 15 wt%, ±5 %, of a compatibilizer comprising hydrogenated styrene isoprene copolymer.

**2.** The polymer composition of claim 1, comprising:

a) from 66 wt%, ±5 %, to 82 wt%, ±5 %, polycarbonate polymer;
b) from 16 wt%, ±5 %, to 22 wt%, ±5 %, polypropylene polymer; and
c) from 2 wt%, ±5 %, to 12 wt%, ±5 %, of a compatibilizer.

**3.** The polymer composition of any one of the proceeding claims, wherein said polycarbonate polymer comprises an impact modifier.

**4.** The polymer composition of any one of the proceeding claims, wherein the polypropylene polymer comprises an impact modifier.

**5.** A molded article formed from the polymer composition of any one of the preceding claims.

**6.** The molded article of claim 5, wherein said molded article is a component of interior and exterior automotive trims, extruded sheet and film for building and construction applications or housings for consumer, healthcare, and industrial electronics.

**7.** The molded article of any one of claims 5-6, wherein the blended thermoplastic composition has a ductility of 100% at 10 °C when measured by a Notched Izod Impact test performed according to ASTM D256.

**8.** A method of forming a polymer composition comprising coextruding a mixture comprising:

a) from 55 wt%, ±5 %, to 85 wt%, ±5 %, polycarbonate polymer;
b) from 10 wt%, ±5 %, to 30 wt%, ±5 %, polypropylene polymer; and
c) from 2 wt%, ±5 %, to 15 wt%, ±5 %, of a compatibilizer comprising hydrogenated styrene isoprene copolymer

**9.** The method of claim 8, wherein said coextruding is preformed using a twin screw extruder.

**10.** The method of claim 9, wherein the mixture is dried at a temperature less than 149°C (300°F) prior to being extruded.

**11.** The method of any one of claims 8-10, wherein the polymer composition has a ductility of 100% at 10 °C when measured by a Notched Izod Impact test performed according to ASTM D256.

**Patentansprüche**

**1.** Polymerzusammensetzung, umfassend:

a) von 55 Gew.-%, ± 5 %, bis 85 Gew.-%, ± 5 % Polycarbonatpolymer;
b) von 10 Gew.-%, ± 5 %, bis 40 Gew.-%, ± 5 % Polypropylenpolymer; und
c) von 2 Gew.-%, ± 5 %, bis 15 Gew.-%, ± 5 % eines Verträglichkeitsvermittlers, der hydriertes Styrol-Isopren-Copolymer umfasst.

**2.** Polymerzusammensetzung nach Anspruch 1, umfassend:

a) von 66 Gew.-%, ± 5 %, bis 82 Gew.-%, ± 5 % Polycarbonatpolymer;
b) von 16 Gew.-%, ± 5 %, bis 22 Gew.-%, ± 5 % Polypropylenpolymer; und
c) von 2 Gew.-%, ± 5 %, bis 12 Gew.-%, ± 5 % eines Verträglichkeitsvermittlers.

**3.** Polymerzusammensetzung nach einem der vorhergehenden Ansprüche, wobei das Polycarbonatpolymer einen Elastifikator umfasst.

**4.** Polymerzusammensetzung nach einem der vorhergehenden Ansprüche, wobei das Polypropylenpolymer einen Elastifikator umfasst.

**5.** Formteil aus der Polymerzusammensetzung nach einem der vorhergehenden Ansprüche.

**6.** Formteil nach Anspruch 5, wobei das Formteil eine Komponente von inneren und äußeren Autozierleisten, extrudiertes Blech und eine Folie für Bauanwendungen oder Gehäuse für Verbraucher-, Gesundheitsfürsorge- und industrielle Elektronik ist.

**7.** Formteil nach einem der Ansprüche 5-6, wobei die gemischte thermoplastische Zusammensetzung eine Duktilität von 100 % bei 10 °C aufweist, wenn sie durch einen Izod-Kerbschlagbiegetest gemessen wird, durchgeführt gemäß ASTM D256.

**8.** Verfahren zum Ausbilden einer Polymerzusammensetzung, umfassend das Co-Extrudieren eines Gemisches, umfassend:

a) von 55 Gew.-%, ± 5 %, bis 85 Gew.-%, ± 5 % Polycarbonatpolymer;
b) von 10 Gew.-%, ± 5 %, bis 30 Gew.-%, ± 5 % Polypropylenpolymer; und
c) von 2 Gew.-%, ± 5 %, bis 15 Gew.-%, ± 5 % eines Verträglichkeitsvermittlers, der hydriertes Styrol-Isopren-Copolymer umfasst.

**9.** Verfahren nach Anspruch 8, wobei das Co-Extrudieren unter Verwendung eines Doppelschneckenextruders durchgeführt wird.

**10.** Verfahren nach Anspruch 9, wobei das Gemisch bei einer Temperatur von weniger als 149 °C (300 °F) vor dem Extrudieren getrocknet wird.

**11.** Verfahren nach einem der Ansprüche 8-10, wobei die Polymerzusammensetzung eine Duktilität von 100 % bei 10 °C aufweist, wenn sie durch einen Izod-Kerbschlagbiegetest gemessen wird, durchgeführt gemäß ASTM D256.

## Revendications

**1.** Composition de polymère comprenant :

a) 55 % en poids, ±5 %, à 85 % en poids, ±5 %, de polymère de polycarbonate ;
b) 10 % en poids, ±5 %, à 40 % en poids, ±5 %, de polymère de polypropylène ; et
c) 2 % en poids, ±5 %, à 15 % en poids, ±5 %, d'un agent de compatibilité comprenant un copolymère de styrène-isoprène hydrogéné.

**2.** Composition de polymère selon la revendication 1, comprenant :

a) 66 % en poids, ±5 %, à 82 % en poids, ±5 %, de polymère de polycarbonate ;
b) 16 % en poids, ±5 %, à 22 % en poids, ±5 %, de polymère de polypropylène ; et
c) 2 % en poids, ±5 %, à 12 % en poids, ±5 %, d'un agent de compatibilité.

**3.** Composition de polymère selon l'une quelconque des revendications précédentes, dans laquelle ledit polymère de polycarbonate comprend un antichoc.

**4.** Composition de polymère selon l'une quelconque des revendications précédentes, dans laquelle ledit polymère de polypropylène comprend un antichoc.

**5.** Article moulé formé à partir de la composition de polymère selon l'une quelconque des revendications précédentes.

**6.** Article moulé selon la revendication 5, dans lequel ledit article moulé est un composant de garnitures automobiles intérieures et extérieures, de feuille et film extrudés pour des applications de construction et du bâtiment ou des logements pour de la consommation, des soins de santé et de l'électronique industrielle.

**7.** Article moulé selon l'une quelconque des revendications 5 et 6, dans lequel la composition thermoplastique mélangée présente une ductilité de 100 % à 10 °C, mesurée par un essai de résistance aux chocs Izod avec entaille selon la norme ASTM D256.

**8.** Procédé de formation d'une composition de polymère comprenant la co-extrusion d'un mélange comprenant :

a) 55 % en poids, ±5 %, à 85 % en poids, ±5 %, de polymère de polycarbonate ;

b) 10 % en poids, ±5 %, à 30 % en poids, ±5 %, de polymère de polypropylène ; et
c) 2 % en poids, ±5 %, à 15 % en poids, ±5 %, d'un agent de compatibilité comprenant un copolymère de styrène-isoprène hydrogéné.

**9.** Procédé selon la revendication 8, dans lequel ladite co-extrusion est réalisée à l'aide d'une extrudeuse à deux vis.

**10.** Procédé selon la revendication 9, dans lequel le mélange est séché à une température inférieure à 149 °C (300 °F) avant d'être extrudé.

**11.** Procédé selon l'une quelconque des revendications 8 à 10, dans lequel la composition de polymère présente une ductilité de 100 % à 10 °C, mesurée par un essai de résistance aux chocs Izod avec entaille selon la norme ASTM D256.

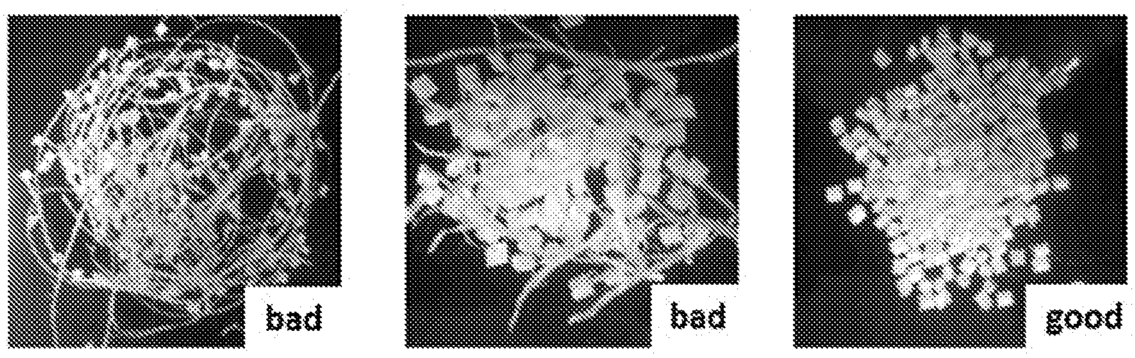


**Figure 1.**

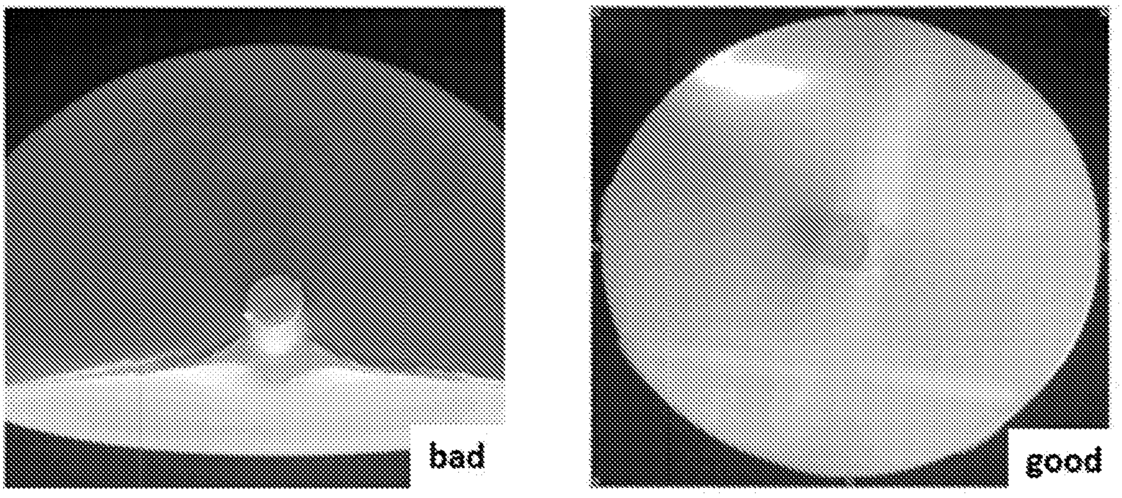


**Figure 2.**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5021504 A
- US 7786246 B

### Non-patent literature cited in the description

- Plastics Additives Handbook. Hanser Gardner Publications, Inc, 2001, 540